# EUROPÄISCHE PATENTSCHRIFT

(11) **EP 3 699 409 B1**
(45) Veröffentlichungstag und Bekanntmachung des Hinweises auf die Patenterteilung: **08.09.2021**
(21) Anmeldenummer: 20156803.7
(22) Anmeldetag: 12.02.2020
(51) Int. Cl.: F01N 13/00, F16L 41/00, F01N 13/16

(54) **SONDENSTUTZEN FÜR EINE ABGASANLAGE**
SENSORBOSS FOR AN EXHAUST SYSTEM
MANCHON DE SONDE POUR UNE INSTALLATION DE GAZ D'ÉCHAPPEMENT

(30) Priorität: 20.02.2019 DE 102019001246
(43) Veröffentlichungstag der Anmeldung: 26.08.2020
(73) Patentinhaber: Purem GmbH, 66539 Neunkirchen (DE)
(72) Erfinder: Ackermann, Dieter, 73733 Esslingen (DE)
(74) Vertreter: Ruttensperger Lachnit Trossin Gomoll

(56) Entgegenhaltungen:
- EP-A1- 3 530 898
- DE-A1- 10 324 956
- DE-A1-102016 113 231
- DE-U1-202009 002 216
- US-A1- 2006 059 683

## Beschreibung

Die Erfindung betrifft einen Sondenstutzen zum Anbringen von Messsonden, wie zum Beispiel Lambdasonden, an einer Abgasanlage. Zu diesem Zweck werden Öffnungen in das Gehäuse der Abgasanlagen eingebracht und die Stutzen so in die Öffnungen eingesetzt und mit dem Gehäuse verschweißt, dass das Gehäuse wieder luftdicht verschlossen ist. Die Stutzen weisen in der Regel ein Innengewinde auf, in das die jeweilige Sonde hineingeschraubt werden kann. An der außen liegenden Stirnseite des Stutzens ist eine planare Dichtfläche vorgesehen. Beim Einschrauben der Sonde in das Gewinde wird eine Dichtfläche der Sonde an die Dichtfläche des Stutzens gepresst, um einen gasdichten Verschluss der Öffnung zu gewährleisten.

Abgasanlagen sind von ihrer Geometrie grundsätzlich an das jeweilige Fahrzeug angepasst, in das sie eingebaut werden sollen. Generell ist der zur Verfügung stehende Raum im Motorraum und im Bereich des Unterbodens sehr knapp bemessen, so dass die Abgasanlagen aufwendig in den zur Verfügung stehenden Raum hineinkonstruiert werden müssen.

Insbesondere Bauteile, die von der Abgasanlage abstehen, wie die eingangs erwähnten Messsonden, sind schwierig unterzubringen. Es ist daher nicht genug Raum vorhanden, um einen Standardstutzen zu verwenden, der allen Gegebenheiten entsprechen würde. Aus diesen Gründen ist für jeden Fahrzeugtyp ein gesonderter Stutzen erforderlich.

Zudem werden die Stutzen oft nicht an ebenen Bauteilen sondern an Freiformen angeschweißt, was in der Regel eine Ausführung als Schmiede- oder Gussteil erforderlich macht. Diese Schmiede- oder Gussteile müssen dann in einem weiteren Arbeitsschritt bearbeitet werden, um das Gewinde und die planare Flächen zu erzeugen. In der Folge sind die Sondenstutzen in ihrer Herstellung sehr teuer.

Weiterhin sind Anforderungen an die Maßhaltigkeit der Dichtflächen und die Festigkeit des Gewindes hoch. Zum einen muss die Dichtheit gewährleistet werden und zum anderen kann über die Lebensdauer einer Katalysatoranlage ein Austausch der Sonden erforderlich sein. Ein Ausreißen des Gewindes beim Wechseln der Sonde könnte jedoch den Austausch des Kompletten Katalysatorgehäuses erforderlich machen.

Aus der EP 2 270 320 A2 ist beispielsweise ein Sondenstutzen bekannt, der vollständig als Tiefziehteil aus Blech hergestellt wird. Auf diese Weise lässt sich ein Sondenstutzen günstig herstellen, jedoch sind die oben erwähnten Anforderungen an die Dichtheit und Festigkeit nicht in jedem Fall gewährleistet.

Ein Sondenstutzen gemäß dem Oberbegriff des Anspruchs 1 ist aus US 2006/0059683 A1 bekannt. Dieser Sondenstutzen ist mit einem hohlzylindrischen Körper aufgebaut, der eine Öffnung zur Aufnahme einer Messsonde bereitstellt und im Bereich einer Stirnseite desselben an eine Innenoberfläche eines Abgasrohrs einer Abgasanlage angebunden ist.

Ferner zeigen auch DE 20 2009 002216 U1, DE 10 2016 113231 A1, DE 103 24 956 A1 als auch das nachveröffentlichte Dokument EP 3 530 898 A1 einen Sondenstutzen gemäß dem Oberbegriff von Anspruch 1.

Die Aufgabe der vorliegenden Erfindung ist es, einen Sondenstutzen bereit zu stellen, der sich einfach und günstig herstellen lässt und dennoch eine gute Dichtigkeit und eine hohe Festigkeit und Lebensdauer des Gewindes gewährleistet, sowie ein Verfahren zur Herstellung eines derartigen Sondenstutzens bereitzustellen.

Die Aufgabe wird gelöst durch den im Anspruch 1 definierten Aufbau eines Sondenstutzens bzw. das im Anspruch 10 definierte Verfahren zur Herstellung eines derartigen Sondenstutzens. Bevorzugte Ausführungsformen sind Gegenstand der abhängigen Ansprüche.

Die Erfindung beruht auf dem allgemeinen Gedanken, den Sondenstutzen als ein Standardbauteil mit einer einfachen Geometrie aus einem geeignete Material wie beispielsweise Stahl herzustellen und über ein weiteres Bauteil, das an die jeweilige Abgasanlage angepasst ist, mit dieser zu verbinden. So lässt sich der eigentliche Stutzen als Hohlzylinder zum Beispiel als Drehteil aus Stahl für alle Fahrzeugtypen in großer Stückzahl günstig herstellen. Das weitere Bauteil lässt sich Beispielsweise auch als ein Schmiedeteil oder ein Sinterteil ebenfalls günstiger herstellen, da in das Bauteil kein Gewinde mehr geschnitten werden muss. Durch die Kombination von zwei jeweils günstig herzustellenden Bauteilen lassen sich so Sondenstutzen herstellen, die auf alle Anlagentypen anpassbar sind und in der Summe dennoch günstiger sind, als reine Schmiede- oder Gussteile.

Entsprechend einer besonders vorteilhaften Ausführungsform weist der Sondenstutzen für eine Abgasanlage einen im Wesentlichen hohlzylindrisch ausgeführten ersten Körper auf, der an einer ersten Stirnseite eine erste planare Kreisringfläche aufweist, wobei der Sondenstutzen einen zweiten Körper aufweist, der an einem ersten Ende eine ebene Kreisringfläche und innerhalb der ebenen Kreisringfläche einen Durchlass aufweist, dessen Durchmesser dem des Innendurchmessers des ersten Körpers entspricht oder größer ist. Ein zweites Ende des zweiten Körpers ist so ausgeführt, dass es eine gasdichte Verbindung des Sondenstutzens mit einer Anschlussfläche ermöglicht, indem es geometrische Abweichungen der Anschlussfläche von einer Ebene ausgleicht, wobei der erste und zweite Körper im Bereich einer zweiten Stirnseite des ersten Körpers und der ebenen Kreisringfläche aneinander anliegen und mit einer den ersten Körper umlaufenden Schweißnaht so miteinander verschweißt sind, dass die Körper gasdicht miteinander verbunden sind.

Gemäß einer vorteilhaften Weiterbildung der Erfindung weist der erste Körper an der zweiten Stirnseite eine im Wesentlichen zweite planare Kreisringfläche auf, an deren Außenseite eine umlaufende Erhebung vorgesehen ist, wobei der zweite Körper an einem ersten Ende eine ebene Kreisringfläche aufweist, deren Formtoleranz im Bereich von 0,2 mm liegt und deren Innendurchmesser dem Durchmesser des Durchlasses entspricht oder größer ist und deren Außendurchmesser dem Aussendurchmesser des ersten Körpers entspricht oder größer ist. Die Körper sind im zusammengebauten Zustand so zueinander angeordnet, dass sie im Bereich der umlaufenden Erhebung und der ebenen Kreisringflächen aneinander anliegen und mit einer umlaufenden Schweißnaht miteinander verschweißt sind.

Die Ausbildung umlaufenden Erhebung an einem Körper und einer ebenen Kreisringfläche in diesem Formtoleranzbereich am anderen Körper ermöglicht es, sehr schnelle Schweißverfahren wie beispielsweise das Kondensatorimpulsschweißen zur Erzeugung der umlaufendend gasdichten Schweißnaht zu verwenden. Ein weiterer großer Vorteil dieses Schweißverfahrens ist es, dass kein Verzug der Buchse erfolgt. Somit muss das Gewinde in der Buchse weder geprüft noch nachbearbeitet werden, wie dies beispielsweise beim MAG Schweißen der Fall ist. Dadurch lassen sich die Kosten der Herstellung weiter reduzieren.

Gemäß einer vorteilhaften Weiterbildung der Erfindung weist der erste Körper an der zweiten Stirnseite einen Abschnitt auf, an dem der Durchmesser des ersten Körpers kleiner oder gleich Durchmesser des Durchlasses ist.

Durch diese Ausgestaltung ragt im zusammengebauten Zustand der obige Abschnitt in den zweiten Körper hinein. Dies ermöglicht eine vereinfachte Montagevorrichtung , da der erste Körper bei der Vormontage in dem zweiten zentriert wird. Auf diese Weise lässt sich die Fertigung des Sondenstutzens vereinfachen.

Gemäß einer vorteilhaften Weiterbildung der Erfindung geht der zweite Körper im Anschluss an die ebene Kreisringfläche in einen im Wesentlichen hohlzylindrisch ausgeführten Bereich übergeht, wobei das zweite Ende des zweiten Körpers so ausgeführt ist, dass eine abschließende Fläche des zweiten Endes in einer Ebene liegt, die nicht parallel zu der ebenen Kreisringfläche ist.

Durch diese Ausgestaltung lässt sich mit einem sehr kleinen, ebenfalls hohlzylindrisch ausgeführtem Bauteil, eine Anpassung des Sondenstutzens an die Gehäusegeometrie der Abgasanlage anpassen. Beispielsweise lässt sich mit einer sehr dünnen Scheibe, deren Stirnseiten zueinander nicht planparallel sind sondern einen Winkel zueinander aufweisen, eine Anpassung an eine Anschrägung des Gehäuses ausgleichen.

Gemäß einer vorteilhaften Weiterbildung der Erfindung geht der zweite Körper im Anschluss an die ebene Kreisringfläche in einen gewölbten oder teilzylindrisch ausgeführten Bereich über.

Die Ausgestaltung des Endes des zweiten Körpers, das zur Anbindung an die Abgasanlage vorgesehen ist, als gewölbte oder teilzylindrische Fläche, ermöglicht die Anbindung des Sondenstutzens an eine Vielzahl von unterschiedlich ausgeführten Abgasanlagentypen.

Gemäß der Erfindung ist die ebene Kreisringfläche des zweiten Körpers mit einem planierenden Verfahren nachbearbeitet.

Planieren ist ein Verfahren, bei dem in einer Richtung senkrecht zu der ebenen Kreisringfläche ein Druck auf das Bauteil aufgebracht wird, um durch eine geringfügige Verformung des Bauteils eine ebene Fläche in der erforderlichen Formtoleranz herzustellen. Dies ist ein sehr einfaches und schnelles Verfahren, durch das eine weitere spanende Bearbeitung des Bauteils vermieden wird und so weitere Kosten eingespart werden können.

Gemäß einer vorteilhaften Weiterbildung der Erfindung ist der erste Körper als Drehteil aus Stahl ausgeführt.

Durch die Herstellung der Standardbuchse als Drehteil kann eine schnelle und günstige Herstellung der Buchse mit einer sehr genauen Formtoleranz gewährleistet werden.

Gemäß einer vorteilhaften Weiterbildung der Erfindung ist der zweite Körper als Tiefziehteil aus Blech ausgeführt.

Unter bestimmten Gegebenheiten ist es nicht erforderlich, den zweiten Körper als Schmiede oder Sinterteil herzustellen. Durch die Verwendung des noch günstigeren Verfahrens des Tiefziehens lässt sich so eine weitere Kostenreduktion erzielen. Somit kann der Sondenstutzen auf eine günstige Art und Weise an nahezu beliebig geformte Abgasanlagentypen angepasst werden.

Gemäß einer vorteilhaften Weiterbildung der Erfindung wird der Sondenstutzen so hergestellt, dass zuerst ein erster Körper aus Stahl gedreht wird, der einen Hohlzylinder mit planaren Kreisringflächen an beiden Enden bildet, wobei an einer der Kreisringflächen eine umlaufende Erhebung ausgebildet wird, die im Querschnitt die Form eines gleichseitigen Dreiecks aufweist. Dann wird ein zweiter Körper als gesintertes oder geschmiedetes Bauteil hergestellt wird, wobei an einem Ende des zweiten Körpers durch ein planierendes Verfahren eine Kreisringfläche mit einer Formtoleranz von 0,2 mm erzeugt wird. Anschließend werden der erste und zweite Körper so angeordnet, dass die umlaufende Erhebung des ersten Körpers an der ebenen Kreisringfläche des zweiten Körpers anliegt und beide Körper mittels Kondensatorimpulsschweißens miteinander verbunden.

Das Kondensatorimpulsschweißen ist durch sehr kurze Schweißzeiten mit einer lokalen Energiekonzentration und einer keinen Wärmeeinflusszone in den Bauteilen gekennzeichnet. Dadurch wird ein Wärmeverzug des Gewindes im ersten Körper vermieden und somit die Arbeitsgänge des Kontrollieren des Gewindes und das häufig notwendige Nachbearbeiten vermieden. Zudem wird das sichere Schweißen von hochfesten Stählen und verschiedensten Materialkombinationen, auch gut leitfähiger Schweißpartner unterschiedlichster Abmessungen ermöglicht.

Weitere Merkmale und Vorteile der Erfindung ergeben sich aus der nachfolgenden Beschreibung von Ausführungsbeispielen der Erfindung, anhand der Figuren, die erfindungswesentliche Merkmale zeigen, und aus den Ansprüchen.

### Kurze Beschreibung der Zeichnungen

Einige Ausführungsbeispiele der Erfindung sind in den Zeichnungen dargestellt und in der nachfolgenden Beschreibung näher erläutert. In den Zeichnungen zeigt:
- Fig. 1: eine Schnittdarstellung einer Ausführungsform des Sondenstutzens,
- Fig. 2: eine Schnittdarstellung einer weiteren Ausführungsform des Sondenstutzens,
- Fig. 3: eine Schnittdarstellung einer weiteren Ausführungsform des Sondenstutzens,
- Fig. 4: eine Schnittdarstellung des ersten Körpers dieser Ausführungsform, und
- Fig. 5: eine Schnittdarstellung einer Ansicht einer Ausführungsform des zweiten Körpers.

### Ausführliche Beschreibung der Ausführungsbeispiele

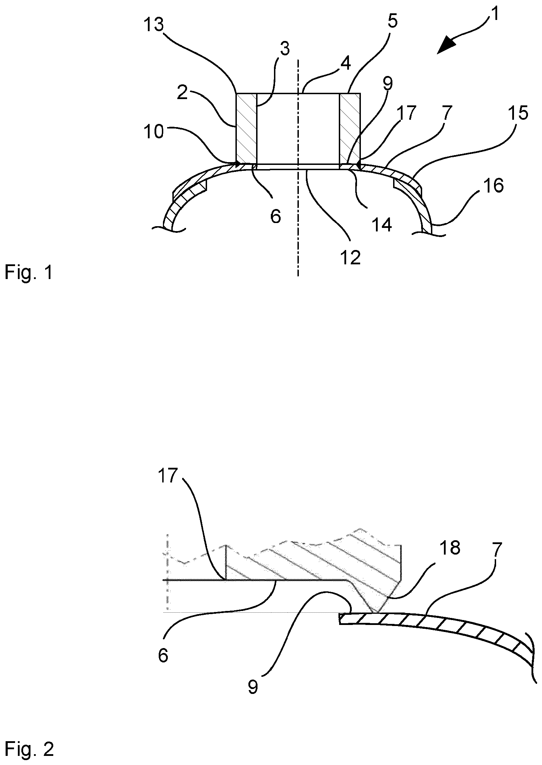

Der in **Figur 1** dargestellte Sondenstutzen 1 weist einen ersten Körper 2 zur Aufnahme einer (nicht dargestellten) Messsonde auf. Der Körper 2 ist als im Wesentlichen hohlzylindrische Buchse aus einem geeigneten Material wie z.B. Stahl hergestellt. Da die Sonde einerseits sicher an dem ersten Körper 2 zu befestigen sein, anderseits aber im Falle eines Defekts auch wieder entnehmbar sein muss, ist an der Innenseite 3 der Buchse ein Innengewinde vorgesehen. Die Sonde ist im montierten Zustand über ein an der Sonde vorgesehenes Außengewinde in die Buchse eingeschraubt. Um zu verhindern, dass über die der Abgasanlage abgewandten Öffnung 4 der Buchse Abgase nach außen entweichen, muss die Öffnung 4 gegenüber der Sonde gasdicht abgeschlossen sein. Gasdicht bedeutet im Sinne dieser Erfindung, dass bei in Abgasanlagen üblicherweise herrschenden Drücken im Wesentlichen kein Gas aus der Öffnung in die Umgebung entweicht. Zu diesem Zweck ist an der Buchse eine erste planare Kreisringfläche 5 an dem im montierten Zustand dem von der Abgasanlage abgewandten Ende der Buchse vorgesehen. Unter einer planaren Kreisringfläche ist eine in einer Ebene liegende Ringfläche gemeint, die eine Formtoleranz der Ebene im Bereich 0,2 mm aufweist. Die Buchse kann beispielsweise als Drehteil hergestellt werden, wobei die Kreisringfläche 5 mit der erforderlichen Toleranz mit hergestellt wird.

Diese Kreisringfläche 5 wirkt im zusammengebauten Zustand mit einer an der Sonde vorgesehenen Dichtfläche zusammen, wobei die Dichtflächen durch das Einschrauben der Sonde in die Buchse gegeneinander gepresst werden. Wahlweise kann zwischen der Kreisringfläche 5 und er Dichtfläche ein Dichtring vorgesehen sein. Weiterhin ist an der Buchse eine zweite planare Kreisringfläche 6 an dem im montierten Zustand der Abgasanlage zugewandten Ende der Buchse vorgesehen. Die Formtoleranz dieser planaren Kreisringfläche 6 liegt ebenfalls im Bereich von 0,2 mm. Die Einhaltung von Formtoleranzen in diesem Bereich ermöglichen neben einer guten Abdichtungsmöglichkeit am einen Ende der Buchse weiterhin die Verwendung verschiedener Fügetechniken am anderen Ende der Buchse, die sich bei gröberen Formtoleranzen nur schwieriger oder gar nicht umsetzen lassen würden.

Der Sondenstutzen **1** weist weiterhin einen zweiten Körper **7** auf, über den der Sondenstutzen **1** an die Abgasanlage angebunden wird. In der in **Figur 1** dargestellten Ausführungsform weist der zweite Körper **7** an einem ersten Ende **14** eine ebene Kreisringfläche **9** auf, innerhalb derer ein Durchlass **12** für die Messsonde vorgesehen ist. Im zusammengebauten Zustand liegt der erste Körper **2** mit der planaren Kreisringfläche 6 an der ebenen Kreisringfläche **9** an. Im fertig hergestellten Zustand sind die Körper in diesem Bereich mit einer den ersten Körper **2** umlaufenden Schweißnaht **10** gasdicht miteinander verbunden. Ein zweites Ende **15** des zweiten Körpers **7** ist in dieser Ausführungsform als gewölbte Freiform ausgeführt, die an eine ebenfals gewölbte Anschlussfläche **16** einer Abgasanlage angepasst ist. Durch diese Ausgestaltung des zweiten Körpers **7** wird das Anbringen des als Standardbauteil hergestellten ersten Körpers **2** an beliebige Oberflächen ermöglicht, die in ihrer Geometrie von einer Ebene abweichen. Da der zweite Körper **7** mit seinem zweiten Ende **15** flächig an der Anschlussfläche **16** anliegt, kann auf eine einfache Weise wie zum Beispiel MAG Schweißen oder einem anderen gängigen Schweißverfahren eine gasdichte Verbindung zwischen dem zweiten Körper **7** und der Anschlussfläche **16** erzeugt werden.

Bei einer besonders vorteilhaften Ausführungsform werden der erste und zweite Körper durch Kondensatorimpulsschweißen miteinander verschweißt, wodurch sich eine sehr kurze Fertigungszeit realisieren lässt. Zudem wird nur in einem sehr kleinen Bereich des ersten Körpers **2** über einen sehr kurzen Zeitraum Wärme eingetragen. Somit wird vermieden, dass sich das Innengewinde an der Innenseite **3** der Buchse durch Wärmeeintrag verformt. Damit entfällt ein nachträgliches Kontrollieren und Nachbearbeiten des Innengewindes, das ansonsten zur Sicherstellung der Maßhaltigkeit und Funktionalität des Gewindes notwendig wäre.

Der in **Figur 2** dargestellte, noch nicht verschweißte, Sondenstutzen **1** weist einige Merkmale auf, die für das Kondensatorimpulsschweißen besonders vorteilhaft sind. So weist der erste Körper 2 an der Außenseite der zweiten planaren Kreisringfläche 6 eine umlaufende Erhebung 18 auf, die vor dem Verschweißen den Querschnitt eines gleichseitigen Dreiecks aufweist. Das Dreieck weist in der Spitze einen Winkel **α1** von ca. 70° auf. Der Winkel **α₂** zwischen der Außenwand des ersten Körpers 2 und der Außenseite des Dreiecks beträgt ca. 35°. Das Dreieck weist an seiner Spitze vor dem Verschweißen vorzugsweise eine Breite **b₂** von höchstens 0,2 mm auf. Dadurch wird die Auflagefläche, mit der der erste Körper 2 an der ebenen Kreisringfläche 9 des zweiten Körpers 7 vor dem Verschweißen anliegt, sehr klein. Dadurch ergibt sich in diesem Bereich beim Schweißvorgang eine hohe Stromdichte, die eine Erhitzung und teilweise Aufschmelzung des Metalls in diesem Bereich bewirkt. Der erste Körper 2 und der zweite Körper 7 werden vor dem Schweißvorgang gegeneinander gepresst, wodurch der erste Körper 2 ca. 0,5 mm in den zweiten Körper 7 einsinkt. Die Höhe h der umlaufenden Erhebung 18 im nicht verschweißten Zustand von ca. 1,5 mm reduziert sich damit im verschweißten Zustand auf ca. 1 mm. Somit ist eine umlaufende gasdichte Verbindung der beiden Körper gewährleistet. Der zweite Körper **7** weist eine ebenen Kreisringfläche **9** auf, die eine Formtoleranz von 0,2 mm aufweist. Durch diese Formtoleranz wird eine gleichmäßige Auflage des ersten Körpers **2** auf den zweiten Körper **7** vor dem Verschweißen gewährleistet. Dies ist für das Kondensatorimpulsschweißen essentiell, da bereits kleinste Spalte zu einer Unterbrechung der Schweißnaht führen können. Die ebenen Kreisringfläche **9** sollte innerhalb und außerhalb einer Auflagelinie **L** noch eine Breite **b₁** von 2 mm aufweisen.

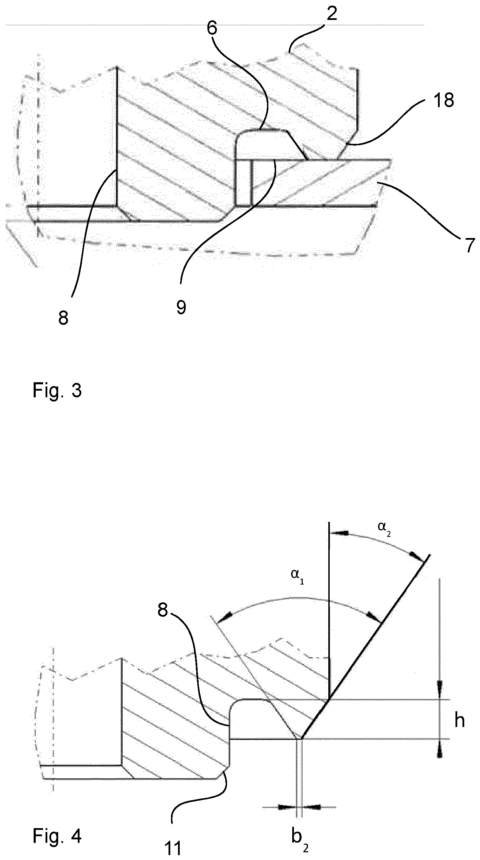

In **Figur 3** ist eine Schnittdarstellung eines Sondenstutzens **1** dargestellt, der mittels Kondensatorimpulsschweißen hergestellt wurde. Der zweite Körper **7** weist immer noch die ebenen Kreisringfläche **9** mit der Formtoleranz von 0,2 mm auf. Der erste Körper **2** ist mit der an der zweiten planaren Kreisringfläche **6** angeordneten umlaufenden Erhebung **18** durch eine Schweißnaht fest mit dem zweiten Körper **7** verbunden. In der dargestellten Ausführungsform weist der erste Körper **2** einen Abschnitt **8** auf, dessen Durchmesser kleiner ist als der Durchmesser des Durchlasses **12,** der in den Durchlass **12** hineinragt. Durch diese Ausführungsform kann der erste Körper **2** vor dem Verschweißen in den zweiten Körper **7** eingesetzt werden. Zur Erleichterung des Einsetzens ist an dem ersten Körper **2** eine Fase **11** vorgesehen. Diese Ausführungsform ermöglicht eine Vereinfachung der Montagevorrichtung, mit der die Bauteile vor dem Verschweißen verspannt werden.

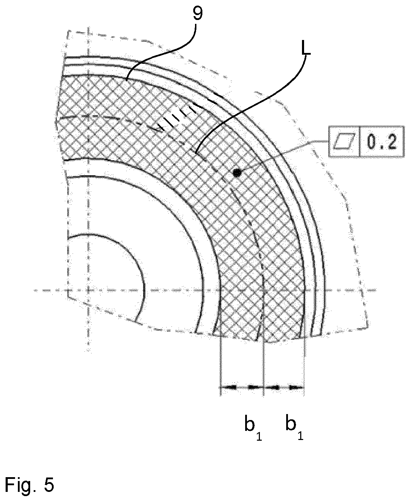

Mit Bezug auf die vorangehend angesprochene Formtoleranz ist darauf hinzuweisen, dass im Sinne der vorliegenden Erfindung damit die Ebenheit z.B. der Kreisringfläche 9 angesprochen und als solche in der **Figur 5** symbolisch dargestellt ist. Mit einer Formtoleranz bzw. Ebenheit von 0,2 mm bzw. im Bereich von 0,2 mm kann somit zum Ausdruck gebracht werden, dass die maximale axiale Abweichung bzw. ein maximaler axialer Versatz zweier Punkte auf der betrachteten Fläche, zum Beispiel der Kreisringfläche 9, zueinander in Richtung einer von der Kreisringfläche umgebenen und in den **Figuren 1** bis **4** als Strich-Punkt-Linie dargestellten Achse einen Wert von z.B. etwa 0,2 mm nicht übersteigt.

In **Figur 4** ist ein erster Körper 2 dieser Ausführungsform vor dem Schweißen dargestellt, in der die umlaufende Erhebung **18** im unverformten Zustand dargestellt ist.

In Figur **5** ist eine Ansicht des zweiten Körpers **7** vor dem Verschweißen und insbesondere die ebene Kreisringfläche **9** dargestellt.

Obwohl bestimmte Elemente, Ausführungsformen und Anwendungen der vorliegenden Erfindung dargestellt und beschrieben worden sind, versteht es sich, dass die Erfindung nicht darauf beschränkt ist und der Fachmann Modifikationen vornehmen kann, ohne vom Gültigkeitsbereich der vorliegenden Offenbarung, insbesondere angesichts der obigen Lehre, abzuweichen.

### Bezugszeichenliste

- 1: Sondenstutzen
- 2: Erster Körper
- 3: Innenseite der Buchse
- 4: Öffnung
- 5: Erste planare Kreisringfläche
- 6: Zweite planare Kreisringfläche
- 7: Zweiter Körper
- 8: Abschnitt
- 9: Ebene Kreisringfläche
- 10: Schweißnaht
- 11: Fase
- 12: Durchlass
- 13: Erste Stirnseite
- 14: Erstes Ende
- 15: Zweites Ende
- 16: Anschlussfläche
- 17: Zweite Stirnseite
- 18: Umlaufende Erhebung

## Patentansprüche

1. Sondenstutzen (1) zur Anbringung an einer in ihrer Geometrie von einer Ebene abweichenden Oberfläche einer Abgasanlage, umfassend einen im Wesentlichen hohlzylindrisch ausgeführten ersten Körper (2) mit einer ersten planaren Kreisringfläche (5) an einer ersten Stirnseite (13) und einer zweiten Stirnseite (17),
**gekennzeichnet durch** einen zweiten Körper (7), und **dadurch, dass** der zweite Körper (7):
- an einem ersten Ende (14) eine mit einem planierenden Verfahren nachbearbeitete ebene Kreisringfläche (9) und innerhalb der ebenen Kreisringfläche (9) einen Durchlass (12) aufweist, dessen Durchmesser dem des Innendurchmessers des ersten Körpers (2) entspricht oder größer ist, wobei der erste Körper (2) im Bereich seiner zweiten Stirnseite (17) an der ebenen Kreisringfläche (9) des zweiten Körpers (7) anliegt und mit einer den ersten Körper (2) umlaufenden Schweißnaht (10) gasdicht mit dem zweiten Körper (7) verbunden ist,
- ein mit einer gewölbten Anschlussfläche (16) einer Abgasanlage zu verbindendes zweites Ende (15) aufweist, wobei das zweite Ende (15) zum Ermöglichen einer gasdichten Verbindung des Sondenstutzens (1) mit der Anschlussfläche (16) eine geometrische Abweichung der Anschlussfläche (16) von einer Ebene ausgleichend gewölbt ist.

2. Sondenstutzen (1) nach Anspruch 1, wobei der erste Körper (2) an der zweiten Stirnseite (17) eine im Wesentlichen zweite planare Kreisringfläche (6) aufweist, an deren Außenseite eine umlaufende Erhebung (18) vorgesehen ist
und wobei der zweite Körper (7) an einem ersten Ende eine ebene Kreisringfläche (9) aufweist, deren Formtoleranz im Bereich von 0,2 mm liegt und deren Innendurchmesser dem Durchmesser des Durchlasses (12) entspricht oder größer ist und deren Außendurchmesser dem Aussendurchmesser des ersten Körpers (2) entspricht oder größer ist,
wobei die Körper (2, 7) im zusammengebauten Zustand so zueinander angeordnet sind, dass sie im Bereich der umlaufenden Erhebung (18) und der ebenen Kreisringflächen (9) aneinander anliegen und mit einer umlaufenden Schweißnaht (10) miteinander verschweißt sind.

3. Sondenstutzen (1) für eine Abgasanlage nach einem der vorhergehenden Ansprüche, wobei der erste Körper (2) an der zweiten Stirnseite (17) einen Abschnitt (8) aufweist, an dem der Durchmesser des ersten Körpers (2) kleiner oder gleich dem Durchmesser des Durchlasses (12) ist.

4. Sondenstutzen (1) für eine Abgasanlage nach Anspruch 3, wobei der Abschnitt (20) in den Durchlass (12) des zweiten Körpers (7) hineinragt.

5. Sondenstutzen (1) nach einem der vorhergehenden Ansprüche, wobei der zweite Körper (7) im Anschluss an die ebene Kreisringfläche (9) in einen im Wesentlichen hohlzylindrisch ausgeführten Bereich übergeht, wobei das zweite Ende (15) des zweiten Körpers (7) so ausgeführt ist, dass eine abschließende Fläche des zweiten Endes (15) in einer Ebene liegt, die nicht parallel zu der ebenen Kreisringfläche (9) ist.

6. Sondenstutzen (1) nach einem der Ansprüche 1 bis 4, wobei der zweite Körper (7) im Anschluss an die ebene Kreisringfläche (9) in einen gewölbten oder teilzylindrisch ausgeführten Bereich übergeht.

7. Sondenstutzen (1) nach einem der vorhergehenden Ansprüche, wobei die erste planare Kreisringfläche (5) eine Formtoleranz im Bereich von 0,2 mm aufweist.

8. Sondenstutzen (1) nach einem der vorhergehenden Ansprüche, wobei der erste Körper (2) als Drehteil aus Stahl ausgeführt ist.

9. Sondenstutzen (1) nach einem der vorhergehenden Ansprüche, wobei der zweite Körper (7) als Tiefziehteil aus Blech ausgeführt ist.

10. Verfahren zur Herstellung eines Sondenstutzens (1) nach einem der Ansprüche 1-8, **dadurch gekennzeichnet, dass**
a) der erste Körper (2) aus Stahl gedreht wird, der einen Hohlzylinder mit planaren Kreisringflächen (5, 6) an beiden Enden bildet, wobei an einer der Kreisringflächen (6) eine umlaufende Erhebung (18) ausgebildet wird, die im Querschnitt die Form eines gleichseitigen Dreiecks aufweist,
b) der zweite Körper (7) als gesintertes oder geschmiedetes Bauteil hergestellt wird,
c) am ersten Ende (15) des zweiten Körpers (7) durch ein planierendes Verfahren die Kreisringfläche (9) mit einer Formtoleranz von 0,2 mm erzeugt wird,
d) der erste und zweite Körper (2, 7) so angeordnet werden, dass die umlaufende Erhebung (18) des ersten Körpers (2) an der ebenen Kreisringfläche (9) des zweiten Körpers (7) anliegt, und
e) beide Körper (2, 7) mittels Kondensatorimpulsschweißens miteinander verbunden werden.

## Claims

1. Probe socket (1) for mounting at a surface of an exhaust system which deviates in its geometry from a plane, comprising an essentially hollow cylindrically configured first body (2) having a first planar circular ring surface (5) on a first end face (13) and a second end face (17),
**characterized by** a second body (7), and in that the second body (7):
- comprises at its first end (14) a flat circular ring surface (9) which has been finished with a planishing method and which within the flat circular ring surface (9) has a passage (12), whose diameter corresponds to or is greater than the internal diameter of the first body (2), wherein the first body (2) is in contact with the flat circular ring surface (9) of the second body (7) in the area of its second end face (17) and is connected in a gastight manner to the second body (7) by means of a weld seam (10) extending circumferentially around the first body (2),
- comprises a second end (15) to be connected to a curved connection surface (16) of an exhaust system, wherein the second end (15) is curved to allow for a gastight connection of the probe socket (1) to the connection surface (16) by compensating a geometric deviation of the connection surface (16) from a plane.

2. Probe socket (1) in accordance with claim 1, wherein the first body (2) has on the second end face (17) an essentially second planar circular ring surface (6), on the outer side of which a circumferentially extending elevation (18) is provided, and wherein the second body (7) has at a first end a flat circular ring surface (9), whose shape tolerance is in the range of 0.2 mm and whose internal diameter corresponds to or is greater than the diameter of the passage (12) and whose external diameter corresponds to or is greater than the external diameter of the first body (2),
wherein the bodies (2, 7) are arranged in relation to one another in the assembled state such that they are in contact with one another in the area of the circumferentially extending elevation (18) and of the flat circular ring surfaces (9) and are welded together with a circumferentially extending weld seam (10).

3. Probe socket (1) for an exhaust system in accordance with one of the preceding claims, wherein the first body (2) has on the second end face (17) a section (8) at which the diameter of the first body (2) is smaller than or equal to the diameter of the passage (12).

4. Probe socket (1) for an exhaust system in accordance with claim 3, wherein the section (20) protrudes into the passage (12) of the second body (7).

5. Probe socket (1) in accordance with one of the preceding claims, wherein the second body (7) passes over following the flat circular ring surface (9) into an essentially hollow cylindrically configured area, wherein the second end (15) of the second body (7) is configured such that a closing surface of the second end (15) is located in a plane that is not parallel to the flat circular ring surface (9).

6. Probe socket (1) in accordance with one of the claims 1 through 4, wherein the second body (7) passes over following the flat circular ring surface (9) into a curved or partially cylindrically configured area.

7. Probe socket (1) in accordance with one of the preceding claims, wherein the first planar circular ring surface (5) has a shape tolerance in the range of 0,2 mm.

8. Probe socket (1) in accordance with one of the preceding claims, wherein the first body (2) is configured as a turned part consisting of steel.

9. Probe socket (1) in accordance with one of the preceding claims, wherein the second body (7) is configured as a deep-drawn part consisting of sheet metal.

10. Process for manufacturing a probe socket (1) according to one of claims 1 through 8, **characterized in that**
a) the first body (2) is turned from steel, which forms a hollow cylinder with planar circular ring surfaces (5, 6) at both ends, wherein a circumferentially extending elevation (18), which has the shape of an equilateral triangle in its cross section, is formed on one of the circular ring surfaces (6),
b) the second body (7) is prepared as a sintered or forged component,
c) the circular ring surface with a shape tolerance of 0.2 mm is prepared by a planishing method at the first end (15) of the second body (7),
d) the first and second bodies (2, 7) are arranged such that the circumferentially extending elevation (18) of the first body (2) is in contact with the flat circular ring surface (9) of the second body (7), and
e) the two bodies (2, 7) are connected to one another by means of capacitor discharge welding.

## Revendications

1. Manchon de sonde (1) destinée à être montée sur une surface d'un système d'échappement dont la géométrie s'écarte d'un plan, comprenant un premier corps (2) essentiellement creux et de forme cylindrique, présentant une première surface annulaire circulaire plane (5) sur une première face d'extrémité (13) et une deuxième face d'extrémité (17),
**caractérisé par** un deuxième corps (7), et en ce que le deuxième corps (7) :
- comprend à sa première extrémité (14) une surface annulaire circulaire plate (9) qui a été finie avec un procédé de planage et qui, à l'intérieur de la surface annulaire circulaire plate (9), présente un passage (12) dont le diamètre correspond au diamètre interne du premier corps (2) ou est supérieur à celui-ci, dans lequel le premier corps (2) est en contact avec la surface annulaire circulaire plate (9) du deuxième corps (7) dans la zone de sa deuxième face d'extrémité (17) et est relié d'une manière étanche au gaz au deuxième corps (7) au moyen d'un cordon de soudure (10) s'étendant circonférentiellement autour du premier corps (2),
- comprend une deuxième extrémité (15) destinée à être connectée à une surface de connexion incurvée (16) d'un système d'échappement, dans lequel la deuxième extrémité (15) est incurvée pour permettre une connexion étanche aux gaz du manchon de sonde (1) à la surface de connexion (16) en compensant une déviation géométrique de la surface de connexion (16) par rapport à un plan.

2. Manchon de sonde (1) selon la revendication 1, dans lequel le premier corps (2) présente sur la deuxième face d'extrémité (17) une deuxième surface annulaire circulaire essentiellement plane (6), sur le côté extérieur de laquelle est prévue une élévation s'étendant circonférentiellement (18),
et dans lequel le deuxième corps (7) présente à une première extrémité une surface annulaire circulaire plate (9), dont la tolérance de forme est de l'ordre de 0,2 mm et dont le diamètre interne correspond ou est supérieur au diamètre du passage (12) et dont le diamètre externe correspond ou est supérieur au diamètre externe du premier corps (2),
dans lequel les corps (2, 7) sont disposés l'un par rapport à l'autre à l'état assemblé de telle sorte qu'ils sont en contact l'un avec l'autre dans la zone de l'élévation s'étendant circonférentiellement (18) et des surfaces annulaires circulaires plates (9) et sont soudés ensemble avec un cordon de soudure s'étendant circonférentiellement (10).

3. Manchon de sonde (1) pour un système d'échappement selon l'une des revendications précédentes, dans lequel le premier corps (2) présente sur la deuxième face d'extrémité (17) une section (8) au niveau de laquelle le diamètre du premier corps (2) est inférieur ou égal au diamètre du passage (12).

4. Manchon de sonde (1) pour un système d'échappement selon la revendication 3, dans lequel la section (20) fait saillie dans le passage (12) du deuxième corps (7).

5. Manchon de sonde (1) selon l'une des revendications précédentes, dans lequel le deuxième corps (7) passe en suivant la surface annulaire circulaire plate (9) dans une zone configurée essentiellement en cylindre creux, dans lequel la deuxième extrémité (15) du deuxième corps (7) est configurée de telle sorte qu'une surface de fermeture de la deuxième extrémité (15) est située dans un plan qui n'est pas parallèle à la surface annulaire circulaire plate (9).

6. Manchon de sonde (1) selon l'une des revendications 1 à 4, dans lequel le deuxième corps (7) passe en suivant la surface annulaire circulaire plate (9) dans une zone incurvée ou partiellement cylindrique.

7. Manchon de sonde (1) selon l'une des revendications précédentes, dans lequel la surface annulaire circulaire plane (5) a une tolérance de forme de l'ordre de 0,2 mm.

8. Manchon de sonde (1) selon l'une des revendications précédentes, dans lequel le premier corps (2) est configuré comme une pièce tournée constituée d'acier.

9. Manchon de sonde (1) selon l'une des revendications précédentes, dans lequel le deuxième corps (7) est configuré comme une pièce emboutie constituée de tôle.

10. Procédé pour fabriquer un manchon de sonde (1) selon les revendications 1 à 8, **caractérisé en ce que**
a) le premier corps (2) est tourné en acier, qui forme un cylindre creux avec des surfaces annulaires circulaires planes (5, 6) aux deux extrémités, une élévation s'étendant circonférentiellement (18), qui a la forme d'un triangle équilatéral dans sa section transversale, étant formée sur l'une des surfaces annulaires circulaires (6),
b) le deuxième corps (7) est préparé en tant que composant fritté ou forgé,
c) la surface annulaire circulaire avec une tolérance de forme de 0,2 mm est préparée par un procédé de planage à la première extrémité du deuxième corps (7),
d) le premier et le deuxième corps (2, 7) sont disposés de telle sorte que l'élévation s'étendant circonférentiellement (18) du premier corps (2) est en contact avec la surface annulaire circulaire plate (9) du deuxième corps (7), et
e) les deux corps (2, 7) sont reliés l'un à l'autre au moyen d'un soudage par décharge de condensateur.
